(19) Europäisches Patentamt
European Patent Office
Office européen des brevets

(11) **EP 3 888 462 A1**

## (12) EUROPEAN PATENT APPLICATION

(43) Date of publication:
**06.10.2021 Bulletin 2021/40**

(51) Int Cl.:
***A01N 43/16*** (2006.01)          ***A01P 21/00*** (2006.01)
***A23L 33/00*** (2016.01)          ***C12G 1/00*** (2019.01)

(21) Application number: **20167287.0**

(22) Date of filing: **31.03.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2020  PT 2020116211**

(71) Applicant: **Universidade de Trás-os-Montes e Alto
Douro
5001-801 Quinta de Prados (PT)**

(72) Inventors:
• **KUMAR SINGH, RUPESH**
  **5000-033 ANDRÃES (PT)**
• **CARDOSO E FALCO DA COSTA, VIRGÍLIO
  ALEXANDRE**
  **5000-198 VILA REAL (PT)**
• **RIBEIRO COUTINHO DE OLIVEIRA, ANA
  ALEXANDRA**
  **5000-312 MONDRÕES (PT)**

(74) Representative: **Ferreira, Maria Silvina
Clarke, Modet & Co
Av. Casal Ribeiro, N°50-3° andar
1000-93 Lisboa (PT)**

## (54) PROCESS TO INCREASE ANTHOCYANINS AND TOTAL POLYPHENOL CONTENT IN RED WINE

(57)    The present application is related to a process aiming to increase the content of anthocyanins and polyphenol in red wine.

**EP 3 888 462 A1**

## Description

### Technical field

The present application related to a process aiming to increase the content of anthocyanins and polyphenol in red wine.

### Background art

Secondary metabolites are organic compounds produced by plants in response to external stimuli and environmental factors [1]. These metabolites may have an important role in different activities such as pharmaceutical, food and chemical industries, food industry for the organoleptic and sensory characteristics and may also play a bioactive role with beneficial effects on human health [2]. These compounds may have antioxidant [3], anti-cancer [4], antiinflammatory activity or may even improve the sensory properties of food [3].
Phenolic compounds belong to the group of compounds called secondary metabolites and play an essential role in wine quality. Oenologists try to create products that are more appealing to the consumer, with unique characteristics and properties. Phenolic compounds are important in the quality of grapes and wine by modulating the color, sensory properties, stabilization and aging [5]. Due to these characteristics, the wine sector has been conducting more and more studies related to these metabolites [1]. In the grape, the production of some flavonoids (tannins, anthocyanins) will allow an improvement in the phenolic composition of the grape and, consequently, improve the quality of the wine [1]. Bio-stimulants application as an elicitor molecule has been very popular among researchers to achieve various objectives; may be of biotic/abiotic origin and endogenous or exogenous in action [6, 7].
Chitosan is an example of an exogenous biotic bio-stimulant compound. Chemically, chitosan is a polysaccharide, produced by the deacetylation of chitin [8] in an alkaline medium. This polysaccharide is one of the major constituents of the exoskeleton of insects, crustaceans and the cell wall of fungi [5]. It has antimicrobial properties and is able to stimulate plant defenses against pathogenic organisms [5]. In the case of the agri-food industry, more precisely in the grape, the application of chitosan has been studied in the treatment against gray rot and powdery mildew. Additionally, it was observed that the application of chitosan in the grape, from the beginning of its maturation until its harvest, may play a role in increasing the total polyphenol content and in the antioxidant activity of the wine in relation to other types of fungicide treatments [5, 9-11]. Chitosan was previously reported to modulate wine aromatic and sensorial attributes [12]; however, chitosan in nanoparticles form have not been explored yet in this context.

### Summary

The present application related to a process to increase anthocyanins and total polyphenol content in red wine by applying an aqueous solution comprising chitosan nanoparticles to grapevines, wherein the concentration of the solution was maintained from 0.1% to 0.0001% (w/v); however the best results were recorded with 0.001% chitosan nanoparticles solution,
wherein the process comprises at least two applications of the solution.
In on embodiment the chitosan nanoparticles are morphologically spherical.
In another embodiment the chitosan nanoparticles have a diameter between 30 to 76 nm.
In yet another embodiment the first application is done at the beginning of the veraison stage when the grape berries start changing color.
In another embodiment the second application is done 15 days after the first application.
In one embodiment the applications are performed mechanically by hand, using a sprayer pump.

### General description

The present application related to a process aiming to increase the content of anthocyanins and polyphenol in red wine.
Chitosan nanoparticles application in grapevine showed potential to elicit the total polyphenols in derived red wines. Anthocyanin content and total tannins improved significantly as well. Additionally, sensorial analysis suggested qualitative enhancement. The overall observation suggested the stimulatory qualitative effect of chitosan nanoparticles application in grapevine.

### Brief description of drawings

For easier understanding of this application, figures are attached in the annex that represent the preferred forms of implementation which nevertheless are not intended to limit the technique disclosed herein.

Figure 1 shows Table 1 with pH, density, volatile acidity, titrabale acidity, probable alcohol, total anthocyanin, total polyphenols and total tannin content in wines obtained from control, chitosan and chitosan nanoparticles application in vineyards.

Figure 2 shows Table 2 with the average of descriptors after sensory analysis of wines of the Sousão variety. Descriptors with the same letter do not present significant differences in the wines evaluated (ANOVA, Duncan's test for $\alpha \leq 0.05$).

**Best mode for carrying out the invention**

Now, preferred embodiments of the present application will be described in detail with reference to the annexed drawings. However, they are not intended to limit the scope of this application.

The present application relates to a process aiming to increase the content of anthocyanins and total polyphenol in red wine. The process consists in applying an aqueous solution comprising chitosan nanoparticles in a concentration from 0.1% to 0.0001% (w/v). However, the best results were recorded with 0.001% chitosan nanoparticles solution.

In one embodiment the chitosan nanoparticles are morphologically spherical.

In another embodiment the chitosan nanoparticles have a diameter between 30 to 76 nm.

The application is preferably done at the beginning of the veraison stage when the grape berries start changing color.

In one embodiment, at least two applications are performed, one at the beginning of the veraison stage when the grapes start gaining color, and a second application done 15 days after the first application.

Applications are performed mechanically by hand, using a sprayer pump.

*Plant material, Treatment and sample collection*

*Vitis vinifera L. cv. Sousão* was used as a test, deriving from the field area of casa de mateus, Baixo Corgo subregion of the Demarcated Douro Region, northern Portugal. Three phenotypically similar lines were marked (consisting of 20 plants each) for chitosan treatment, three similar lines for chitosan nanoparticles, while three similar lines were marked as control. The vineyard soil has morainic, grass covered, loamy sand, 15% gravel, and vines are trained according to Guyot system.

A solution of 0.01% (w/v) chitosan of fungal origin was prepared by dissolving in 0.01 M aqueous acetic acid solution. Chitosan nanoparticles were prepared and characterized by following a previously described method [13]. In brief, chitosan was dissolved (0.5% w/v) in 0.01 M aqueous acetic acid and pH was maintained to 4.8 with 10N NaOH. Aqueous tripolyphosphate solution (0.25%, w/v) was mixed with chitosan solution a ratio of 3:1 (chitosan: tripolyphosphate) drop by drop continuously under magnetic stirring (500 rpm) at a temperature between 20 and 30°C. Nanoparticles were centrifuged at 10,000 rpm/20 min and the supernatant was discarded, the pellet was rinsed with distilled water and dissolved. The final concentration of chitosan nanoparticles was maintained by 0.1% to 0.0001% (w/v) in water for further application in grapevine.

First applications were performed at the beginning of the veraison stage when the grape berries started to change the color while second application was done after two weeks. All applications were performed manually by using a commercial sprayer. A total of 25kg grapes were collected from each replicate in each application and vinification was performed in lab conditions. Average temperature, humidity, and wind velocity were recorded as 23.4°C, 57.4%, and 6.5 km/h, respectively, during the application until sample collection.

*Winemaking*

Winemaking was performed in three sets of experiments, each treatment as well as control in triplicates in 50 lt stainless steel tanks containing 25 kg grapes each. The first set belonged to control samples where no application was performed, the second set of wine making represented 0.01% chitosan solution treated grapevines; while the third set represented 0.1% to 0.0001% chitosan nanoparticles treated grapevines. Cluster stems were removed, and grape berries were crushed using a manual crusher/destemmer followed by the addition of 10 g/hL potassium metabisulfite at a temperature between 25 and 30°C. Commercial yeasts were rehydrated according to the manufacturer's instructions; each tank was inoculated with 0.25 g/kg of yeast and allowed to ferment. The fermenting must was pumped over every day; density and temperature were recorded by using a hydrometer and thermometer. Fermentations with maceration were allowed to reach a density of 1.0 g/ml. The wines were extracted by manual pressure and stored in glass bottles.

*Determination of pH, density, alcohol content, total titratable acidity and volatile acidity:*

The pH of the wine samples was determined at 20°C adapted from the method [14] using a pH meter by immersing the electrode in the 100 ml wine samples. The temperature and pH values were allowed to stabilize for 2 min and recorded afterwards in triplicates.
The wine density was determined by hydrometer according to the method [14]. The CO2 present in the wine samples was removed by shaking 250 mL for 10 min. The samples were transferred to a 250 mL beaker. The hydrometer and a thermometer were introduced and allowed to stabilize the temperature (approximately 1 min); the sample density was read in triplicate.

The alcohol content of wines was determined by using an ebuliometer, whose scale was previously calibrated with water. Wine boiling point determinations were performed in triplicates.

The total (titratable) acidity was determined in 10 mL decarbonized wine samples. Subsequently, titration was performed with 0.1 M NaOH, using an assay potentiometer coupled to an electrode. The volume of NaOH required to neutralize the solution was recorded [14] and the total acidity calculated according to equation 1; expressed in g/L of tartaric acid.

$$Total\,acidity\left(\frac{g}{L}tartaric\,acid\right) = \frac{N*75*V}{v}$$

Equation 1, Where N represents the normality of the NaOH solution (0.1 N), 75 correspond to the equivalent per gram of tartaric acid, V is the volume of NaOH spent and v the volume of sample studied.

The volatile acidity was adapted from OIV method [14], to determine the concentration of volatile acids in wine samples. Wine samples (50ml) were shaken in a vacuum flask to remove $CO_2$ by vacuum pump. Distilled water (200 ml) was placed in the steam generator of the Cazenave-Ferré device and 10 ml of wine sample was transferred to the bubbler where 0.25 g of tartaric acid and 2 drops of $H_2O_2$ was added. The water flow was switched on to cool the device and condensate the vapors. To the sample volume obtained by distillation, 2 drops of phenolphthalein was added, followed by titrating the solution with 0.1 M NaOH. All tests were performed in triplicates. Volatile acidity was determined and expressed in g/L of acetic acid, calculated according to equation 2.

$$Volatile\,acidity\left(\frac{g}{L}acetic\,acid\right) = \frac{N*60*V}{v}$$

Equation 2, where N represents the normality of the NaOH solution (0.1 N), 60 corresponds to the equivalent per gram of acetic acid, V is the volume of NaOH used to change the color to magenta pink and v is the sample volume.

*Determination of Total anthocyanins, total polyphenol and total tannin content:*

Total anthocyanins were determined by mixing the wine samples (50 μL) with 1950 μL of 1 M HCL solution in a 5ml glass tube gently. The tubes were allowed to incubate at 28°C/3hr and absorbance was recorded at 280nm and 520 nm respectively using a spectrophotometer. The total phenolic content was calculated (A280) and expressed as mg of epicatechin equivalents per liter, using a calibration curve for epicatechin. A520 values were converted into malvidin-3-O-glucoside contents based on a generic extinction coefficient of malvidin-3-O-glucoside [15] and the total anthocyanin content was expressed as mg of malvidin-3-O-glucoside equivalents per liter. All determinations were performed in triplicates for each sample.

The total tannins in wine samples were determined by the methylcellulose precipitation method [16]. In brief, 50 μL of wine was mixed with 600 μL of methylcellulose in the presence of 400 μL of $(NH_4)2SO_4$. The samples were mixed rigorously by using a vortex and incubated for 10 minutes at room temperature followed by centrifugation at 10000rpm/5min and supernatant was collected. A control containing $(NH_4)2SO_4$ and distilled water was performed for each sample. The absorbance at 280 nm of the samples was recorded and tannin content was determined using equations 3 and 4.

$$(Equation\ 3)\quad A280(tannins) = A280(control) - A280(sample\,with\,treatment)$$

$$(Equation\ 4)\quad [tannins] = \left(\frac{A280(tannins)-b}{a}\right) \times DF$$

Where: A280 (tannins) corresponds to the difference in absorbance between the control and the sample with treatment; A280 (control) is the absorbance of the control solution; A280 (sample with treatment) is the absorbance of the sample with treatment; a is the slope and b is the y-intercept of the epicatechin calibration curve (0.01204 and 0.00619, respectively); DF corresponds to the sample dilution factor.

*Sensory analysis*

Sensorial evaluation of red wines was performed according to standard procedure (ISO 3591: 1977). The evaluation panel consisted of 10 people; 9 women and one man, aged between 30 and 50 years old and with previous training in sensory evaluation of food. A Quantitative Descriptive Analysis (ADQ) was performed [17] to evaluate the intensity of the sensory attributes and aimed to identify and quantify the sensory characteristics [18]. Evaluations were performed on the following descriptors / attributes: Appearance (violet color, clarity); Aroma (intensity, fruity, floral, vegetable, spices, smoked, persistence); Flavor (sweet, acid, bitter, astringency, body, persistence); 'Flavor' (floral, fruity, vegetable, spices, smoked) with a structured scale of 1 to 10 points (ISO 4121: 2003). The tests took place from 15:00 to 17:00 h, in a room with a controlled environment and the necessary material for each task, according to the ISO 8589: 2007 standard.

*Statistical analysis*

The statistical analysis of the chemical parameters was carried out in the R Core Team program (2018) and completed with a Tukey test in order to assess the significant differences between control and treatment samples. A significance level of 5% was used. In the sensorial analysis of the wines, the software Statistica® was used. The analysis was completed with the Duncan test in order to assess significant differences at significance level of 5%.

*Results and discussion*

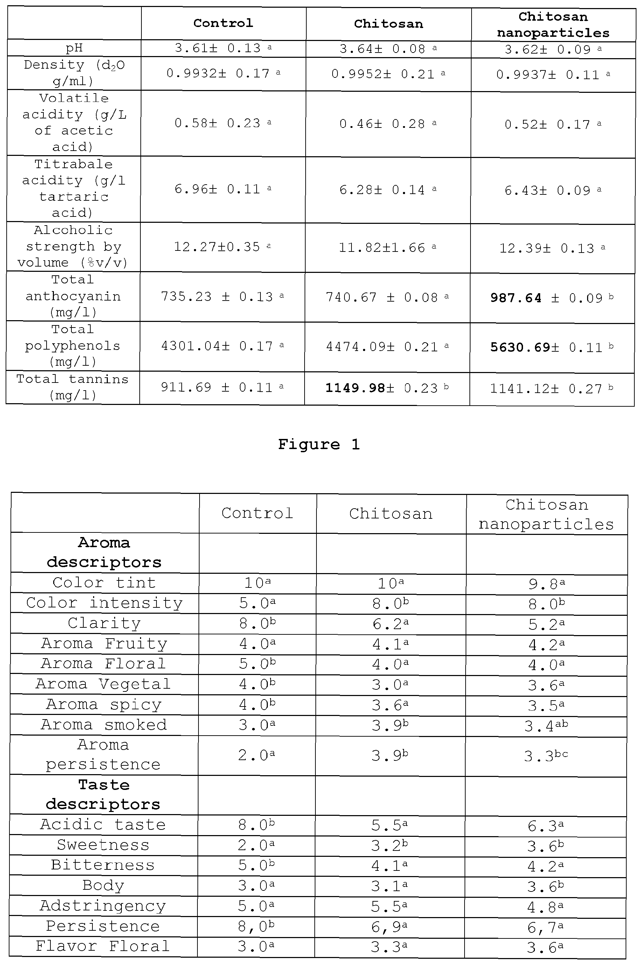

The general parameters were analyzed for all the wines obtained from chitosan and chitosan nanoparticles application in vineyard. However, pH, density, titrabale acidity, volatile acidity and alcoholic strength by volume did not change significantly between treatments and control (Figure 1 table 1). Total anthocyanin content was recorded little bit higher in chitosan treatment in comparison to control. Formulation of 0.001% Chitosan nanoparticles application recorded best results with a 34.28% increase in anthocyanin content in wines in comparison to control and 33.37% higher than chitosan treatment (Figure 1 table 1). The nanoparticle form of chitosan application (0.001%) resulted in a significant increase in the anthocyanin content of wines. Total polyphenols were investigated in both the treatments and chitosan treatment recorded 4.02% higher of total polyphenol content in comparison to control. Solution of 0.001% chitosan nanoparticle application showed best results with a significant increase of 30.89% of polyphenols in comparison to control while 25.83% higher than chitosan treatment (Figure 1 table 1). Total tannins were observed to be higher in chitosan treatment by a significant 26.14% and 25.17% in nanoparticles (0.001%) application (Figure 1 table 1). Tannins were observed the highest with chitosan treatment in comparison to control while no significant difference was observed between chitosan and nanoparticles application in this parameter. The overall findings suggested that chitosan application has improved the wine composition; while 0.001% chitosan nanoparticles showed highest potential for increased accumulation of secondary metabolites in respective wines.

Chitosan application has been tested before in grapevines for their elicitation potential towards qualitatively improvement. However, nanoparticle form has not been applied for this objective. Previously; higher total anthocyanins were recorded in derived wines upon chitosan application while no difference was recorded in total polyphenol content [5]. Another study also reported improvement in color, tannins, aromatic profiles and sensory attributes in red wine upon chitosan application [12]. However, there is no report yet for chitosan nanoparticles application in vineyards and their effect on wine content. Findings suggested (Figure 1 table 1) the higher elicitation potential of chitosan in nanoparticles form towards increased secondary metabolites in grapevine.

Sensory analysis indicated that wines treated with chitosan have greater astringency compared to the control wine. Additionally, they have less floral aroma, less persistence and acidity and more intense fruity, vegetable aroma, smoky aroma, sweet flavor and vegetable flavor than control. The wines obtained upon chitosan nanoparticles treatments in the vineyard have greater aromatic persistence, more intense body and sweet taste compared to the control wine.

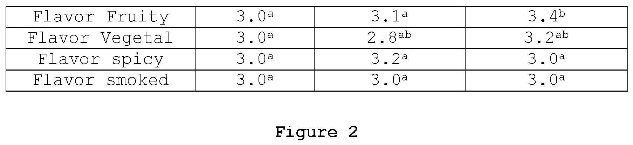

The intensity of the aroma descriptor of spices and the persistence of flavor decreased with the nanoparticles treatment. Additionally, decreased bitterness, acidic taste and less persistence of taste was recorded in wines treated with chitosan nanoparticles (Figure 2 table 2). Chitosan application has been investigated earlier for the elicitation potential in grapevine and aromatic/sensorial characters were studied [12]. Results suggested a more pleasant sensorial profile with a somewhat higher aroma intensity and overall acceptance upon chitosan treatment in vineyards.

However, chitosan nanoparticles formulation has not been tested yet for present objective. Present study is first demonstration of wine phenolics, anthocyanin and sensorial attributes improvement by chitosan nanoparticles application in field condition; to the best of our knowledge. Results suggested that nanoparticles form exerted higher elicitation potential, leading to higher phenolics and anthocyanins accumulation in grapes and thus in the derived wines.

References

1. D'Onofrio, C. C., A.; Davies, C.; Boss, P.K., Induction of secondary metabolism in grape cell cultures by jasmonates. Functional Plant Biology 2009, 36, 323-338.

2. Mithen, R. F.; Dekker, M.; Verkerk, R.; Rabot, S.; Johnson, I. T., The nutritional significance, biosynthesis and bioavailability of glucosinolates in human foods. Journal of the Science of Food and Agriculture 2000, 80, (7), 967-984.

3. Rice-Evans, C.; Miller, N.; Paganga, G., Antioxidant properties of phenolic compounds. Trends in Plant Science 1997, 2, (4), 152-159.

4. Huang, M.-T.; Ferraro, T., Phenolic Compounds in Food and Cancer Prevention. In Phenolic Compounds in Food and Their Effects on Health II, American Chemical Society: 1992; Vol. 507, pp 8-34.

5. Portu, J.; Lopez, R.; Baroja, E.; Santamaria, P.; Garde-Cerdan, T., Improvement of grape and wine phenolic content by foliar application to grapevine of three different elicitors: Methyl jasmonate, chitosan, and yeast extract. Food Chemistry 2016, 201, 213-221.

6. Gastón Gutiérrez; Gamboa Gianfranco Romanazzi; Teresa Garde Cerdán; Alvarez, E. P. P., A review of the use of biostimulants in the vineyard for improved grape and wine quality: effects on prevention of grapevine diseases. Journal of the Science of Food and Agriculture 2019, 99, (3), 1001-1009.

7. Zhao, J.; Davis, L. C.; Verpoorte, R., Elicitor signal transduction leading to production of plant secondary metabolites. Biotechnology Advances 2005, 23, (4), 283-333.

8. Malerba, M.; Cerana, R., Chitosan Effects on Plant Systems. International journal of molecular sciences 2016, 17, (7), 996.

9. Singh, R. K.; Martins, V.; Soares, B.; Castro, I.; Falco, V., Chitosan Application in Vineyards (Vitis vinifera L. cv. Tinto Cão) Induces Accumulation of Anthocyanins and Other Phenolics in Berries, Mediated by Modifications in the Transcription of Secondary Metabolism Genes. International journal of molecular sciences 2020, 21, (1), 306.

10. Singh, R. K.; Soares, B.; Goufo, P.; Castro, I.; Cosme, F.; Pinto-Sintra, A. L.; Ines, A.; Oliveira, A. A.; Falco, V., Chitosan Upregulates the Genes of the ROS Pathway and Enhances the Antioxidant Potential of Grape (Vitis vinifera L. 'Touriga Franca' and 'Tinto Cão') Tissues. Antioxidants 2019, 8, (11), 525.

11. Silva, V. S., R.K.; Gomes, N.; Soares, B.G.; Silva, A.; Falco, V.; Capita, R.; Alonso-Calleja, C.; Pereira, J.E.; Amaral, J.S.; Igrejas, G.; Poeta, P. , Comparative Insight upon Chitosan Solution and Chitosan Nanoparticles Application on the Phenolic Content, Antioxidant and Antimicrobial Activities of Individual Grape Components of Sousão Variety. Antioxidants 2020, 9, (178).

12. Vitalini, S.; Ruggiero, A.; Rapparini, F.; Neri, L.; Tonni, M.; Iriti, M., The application of chitosan and benzothiadiazole in vineyard (Vitis vinifera L. cv Groppello Gentile) changes the aromatic profile and sensory attributes of wine. Food Chemistry 2014, 162, 192-205.

13. Qi, L.; Xu, Z.; Jiang, X.; Hu, C.; Zou, X., Preparation and antibacterial activity of chitosan nanoparticles. Carbohydrate Research 2004, 339, (16), 2693-2700.

14. OIV, Compendium of International Methods of Analysis of Wines and Musts (2 vol.). In 2019.

15. Tudo, J. A. B., A.; Nieuwoudt, H.; Aleixandre, J.L.; du Toit,W. , Spectrophotometric analysis of phenolic compounds in grapes and wines.. J. Agric. Food Chem. 2017, 65, 4009-4026.

16. Sarneckis, C. J. D., R.G.; Jones, P.; Mercurio, M.; Herderich, M.J.; Smith, P.A., Quantification of condensed tannins by precipitation with methyl cellulose: Development and validation of an optimised tool for grape and wine analysis. Aust. J. Grape Wine Res. 2006, 12, 39-49.

17. Osawa, C. C., Ferrari, C. C., Siqueira, P. B., Brito, C. A. K. de, Sanvido, G. B., Botelho, A. P., ... Bolini, H. M. A., Avaliação do perfil sensorial de chá light sabor pêssego. Ciência e Tecnologia de Alimentos 2008, 28, 102-108.

18. Konkel, F. E., Oliveira, S. M. R. de, Simões, D. R. S., & Demiate, I. M., Avaliação sensorial de doce de leite pastoso com diferentes concentrações de amido. Ciência e Tecnologia de Alimentos 2004, 24, (2), 249-254.

**Claims**

1. Process to increase anthocyanins and total polyphenol content in red wine **characterized by** applying an aqueous solution comprising chitosan nanoparticles to grapevines, wherein the concentration of the solution varies from 0.1% to 0.0001% (w/v); and
wherein the process comprises at least two applications of the solution.

2. Process according to the previous claim, wherein the chitosan nanoparticles are morphologically spherical.

3. Process according to any of the previous claims, wherein the chitosan nanoparticles have a diameter between 30 to 76 nm.

4. Process according to any of the previous claims, wherein the first application is done at the beginning of the veraison stage when the grape berries start changing color.

5. Process according to any of the previous claims, wherein the second application is done 15 days after the first application.

6. Process according to any of the previous claims, wherein the applications are performed mechanically by hand, using a sprayer pump.

| | Control | Chitosan | Chitosan nanoparticles |
|---|---|---|---|
| pH | 3.61± 0.13 [a] | 3.64± 0.08 [a] | 3.62± 0.09 [a] |
| Density ($d_2O$ g/ml) | 0.9932± 0.17 [a] | 0.9952± 0.21 [a] | 0.9937± 0.11 [a] |
| Volatile acidity (g/L of acetic acid) | 0.58± 0.23 [a] | 0.46± 0.28 [a] | 0.52± 0.17 [a] |
| Titrabale acidity (g/l tartaric acid) | 6.96± 0.11 [a] | 6.28± 0.14 [a] | 6.43± 0.09 [a] |
| Alcoholic strength by volume (%v/v) | 12.27±0.35 [a] | 11.82±1.66 [a] | 12.39± 0.13 [a] |
| Total anthocyanin (mg/l) | 735.23 ± 0.13 [a] | 740.67 ± 0.08 [a] | **987.64 ± 0.09 [b]** |
| Total polyphenols (mg/l) | 4301.04± 0.17 [a] | 4474.09± 0.21 [a] | **5630.69± 0.11 [b]** |
| Total tannins (mg/l) | 911.69 ± 0.11 [a] | **1149.98± 0.23 [b]** | 1141.12± 0.27 [b] |

## Figure 1

| | Control | Chitosan | Chitosan nanoparticles |
|---|---|---|---|
| **Aroma descriptors** | | | |
| Color tint | 10[a] | 10[a] | 9.8[a] |
| Color intensity | 5.0[a] | 8.0[b] | 8.0[b] |
| Clarity | 8.0[b] | 6.2[a] | 5.2[a] |
| Aroma Fruity | 4.0[a] | 4.1[a] | 4.2[a] |
| Aroma Floral | 5.0[b] | 4.0[a] | 4.0[a] |
| Aroma Vegetal | 4.0[b] | 3.0[a] | 3.6[a] |
| Aroma spicy | 4.0[b] | 3.6[a] | 3.5[a] |
| Aroma smoked | 3.0[a] | 3.9[b] | 3.4[ab] |
| Aroma persistence | 2.0[a] | 3.9[b] | 3.3[bc] |
| **Taste descriptors** | | | |
| Acidic taste | 8.0[b] | 5.5[a] | 6.3[a] |
| Sweetness | 2.0[a] | 3.2[b] | 3.6[b] |
| Bitterness | 5.0[b] | 4.1[a] | 4.2[a] |
| Body | 3.0[a] | 3.1[a] | 3.6[b] |
| Adstringency | 5.0[a] | 5.5[a] | 4.8[a] |
| Persistence | 8,0[b] | 6,9[a] | 6,7[a] |
| Flavor Floral | 3.0[a] | 3.3[a] | 3.6[a] |

| | | | |
|---|---|---|---|
| Flavor Fruity | 3.0$^a$ | 3.1$^a$ | 3.4$^b$ |
| Flavor Vegetal | 3.0$^a$ | 2.8$^{ab}$ | 3.2$^{ab}$ |
| Flavor spicy | 3.0$^a$ | 3.2$^a$ | 3.0$^a$ |
| Flavor smoked | 3.0$^a$ | 3.0$^a$ | 3.0$^a$ |

Figure 2

Europäisches
Patentamt

European
Patent Office

Office européen
des brevets

# EUROPEAN SEARCH REPORT

Application Number

EP 20 16 7287

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | RUPESH KUMAR SINGH ET AL: "Chitosan Application in Vineyards (Vitis vinifera L. cv. Tinto Cão) Induces Accumulation of Anthocyanins and Other Phenolics in Berries, Mediated by Modifications in the Transcription of Secondary Metabolism Genes", INTERNATIONAL JOURNAL OF MOLECULAR SCIENCES, vol. 21, no. 1, 2 January 2020 (2020-01-02), pages 306-1, XP055721843, DOI: 10.3390/ijms21010306 * page 3/10, line 1 - line 4 * * page 8/10, line 4 - line 9 * * figure 1 * * abstract * | 1-6 | INV. A01N43/16 A01P21/00 A23L33/00 C12G1/00 |
| Y,D | SINGH ET AL: "Chitosan Upregulates the Genes of the ROS Pathway and Enhances the Antioxidant Potential of Grape (Vitis vinifera L. 'Touriga Franca' and 'Tinto Cão') Tissues", ANTIOXIDANTS, vol. 8, no. 11, 3 November 2019 (2019-11-03), pages 525-1, XP055721846, DOI: 10.3390/antiox8110525 * page 3/17, line 10 - line 23 * * page 11/17, line 23 - line 24 * * figure 1 * * tables 2, 3 * | 1-6 | TECHNICAL FIELDS SEARCHED (IPC) A01N A23L C12G |

-/--

The present search report has been drawn up for all claims

| Place of search | Date of completion of the search | Examiner |
|---|---|---|
| Munich | 12 August 2020 | Habermann, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 20 16 7287

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | VANESSA SILVA ET AL: "Comparative Insight upon Chitosan Solution and Chitosan Nanoparticles Application on the Phenolic Content, Antioxidant and Antimicrobial Activities of Individual Grape Components of Sousão Variety", ANTIOXIDANTS, vol. 9, no. 2, 21 February 2020 (2020-02-21), pages 178-1, XP055721849, DOI: 10.3390/antiox9020178 * paragraphs 2.1, 2.2, 2.3, 3.1 * * tables 1, 2 * | 1-6 | |
| Y,D | M. IRITI ET AL: "New chitosan formulation prevents grapevine powdery mildew infection and improves polyphenol content and free radical scavenging activity of grape and wine", AUSTRALIAN JOURNAL OF GRAPE AND WINE RESEARCH, vol. 17, no. 2, 30 May 2011 (2011-05-30), pages 263-269, XP055070798, ISSN: 1322-7130, DOI: 10.1111/j.1755-0238.2011.00149.x * page 268, column 1, line 49 - line 51 * * figures 1, 2 * * abstract * | 1-6 | TECHNICAL FIELDS SEARCHED (IPC) |

-/--

The present search report has been drawn up for all claims

| Place of search | Date of completion of the search | Examiner |
|---|---|---|
| Munich | 12 August 2020 | Habermann, Jörg |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Europäisches
Patentamt
European
Patent Office
Office européen
des brevets

Application Number

EP 20 16 7287

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | PORTU JAVIER ET AL: "Improvement of grape and wine phenolic content by foliar application to grapevine of three different elicitors: Methyl jasmonate, chitosan, and yeast extract", FOOD CHEMISTRY, ELSEVIER LTD, NL, vol. 201, 21 January 2016 (2016-01-21), pages 213-221, XP029413721, ISSN: 0308-8146, DOI: 10.1016/J.FOODCHEM.2016.01.086 * paragraphs 2.2, 2.3 * * page 217, column 1, lines 6-7 * * page 217, column 2, line 5 - line 7 * * page 220, column 1, line 55 - line 58 * * page 220, column 1, line 60 - line 61 * * tables 1-3 * ----- | 1-6 | |

TECHNICAL FIELDS
SEARCHED (IPC)

The present search report has been drawn up for all claims

| Place of search | Date of completion of the search | Examiner |
|---|---|---|
| Munich | 12 August 2020 | Habermann, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D'ONOFRIO, C. C., A. ; DAVIES, C. ; BOSS, P.K.** Induction of secondary metabolism in grape cell cultures by jasmonates. *Functional Plant Biology,* 2009, vol. 36, 323-338
- **MITHEN, R. F. ; DEKKER, M. ; VERKERK, R. ; RABOT, S. ; JOHNSON, I. T.** The nutritional significance, biosynthesis and bioavailability of glucosinolates in human foods. *Journal of the Science of Food and Agriculture,* 2000, vol. 80 (7), 967-984
- **RICE-EVANS, C. ; MILLER, N. ; PAGANGA, G.** Antioxidant properties of phenolic compounds. *Trends in Plant Science,* 1997, vol. 2 (4), 152-159
- **HUANG, M.-T. ; FERRARO, T.** Phenolic Compounds in Food and Cancer Prevention. In Phenolic Compounds in Food and Their Effects on Health II. American Chemical Society, 1992, vol. 507, 8-34
- **PORTU, J. ; LOPEZ, R. ; BAROJA, E. ; SANTAMARIA, P. ; GARDE-CERDAN, T.** Improvement of grape and wine phenolic content by foliar application to grapevine of three different elicitors: Methyl jasmonate, chitosan, and yeast extract. *Food Chemistry,* 2016, vol. 201, 213-221
- **GASTÓN GUTIÉRREZ ; GAMBOA GIANFRANCO ROMANAZZI ; TERESA GARDE CERDÁN ; ALVAREZ, E. P. P.** A review of the use of biostimulants in the vineyard for improved grape and wine quality: effects on prevention of grapevine diseases. *Journal of the Science of Food and Agriculture,* 2019, vol. 99 (3), 1001-1009
- **ZHAO, J. ; DAVIS, L. C. ; VERPOORTE, R.** Elicitor signal transduction leading to production of plant secondary metabolites. *Biotechnology Advances,* 2005, vol. 23 (4), 283-333
- **MALERBA, M. ; CERANA, R.** Chitosan Effects on Plant Systems. *International journal of molecular sciences,* 2016, vol. 17 (7), 996
- **SINGH, R. K. ; MARTINS, V. ; SOARES, B. ; CASTRO, I. ; FALCO, V.** Chitosan Application in Vineyards (Vitis vinifera L. cv. Tinto CÃo) Induces Accumulation of Anthocyanins and Other Phenolics in Berries, Mediated by Modifications in the Transcription of Secondary Metabolism Genes. *International journal of molecular sciences,* 2020, vol. 21 (1), 306

- **SINGH, R. K. ; SOARES, B. ; GOUFO, P. ; CASTRO, I. ; COSME, F. ; PINTO-SINTRA, A. L. ; INES, A. ; OLIVEIRA, A. A. ; FALCO, V.** Chitosan Upregulates the Genes of the ROS Pathway and Enhances the Antioxidant Potential of Grape (Vitis vinifera L. 'Touriga Franca' and 'Tinto CÃo') Tissues. *Antioxidants,* 2019, vol. 8 (11), 525
- **SILVA, V. S. ; R.K. ; GOMES, N. ; SOARES, B.G. ; SILVA, A. ; FALCO, V. ; CAPITA, R. ; ALONSO-CALLEJA, C. ; PEREIRA, J.E. ; AMARAL, J.S.** Comparative Insight upon Chitosan Solution and Chitosan Nanoparticles Application on the Phenolic Content, Antioxidant and Antimicrobial Activities of Individual Grape Components of Sousão Variety. *Antioxidants,* 2020, vol. 9, 178
- **VITALINI, S. ; RUGGIERO, A. ; RAPPARINI, F. ; NERI, L. ; TONNI, M. ; IRITI, M.** The application of chitosan and benzothiadiazole in vineyard (Vitis vinifera L. cv Groppello Gentile) changes the aromatic profile and sensory attributes of wine. *Food Chemistry,* 2014, vol. 162, 192-205
- **QI, L. ; XU, Z. ; JIANG, X. ; HU, C. ; ZOU, X.** Preparation and antibacterial activity of chitosan nanoparticles. *Carbohydrate Research,* 2004, vol. 339 (16), 2693-2700
- *OIV, Compendium of International Methods of Analysis of Wines and Musts,* 2019, vol. 2
- **TUDO, J. A. B., A. ; NIEUWOUDT, H. ; ALEIXANDRE, J.L. ; DU TOIT,W.** Spectrophotometric analysis of phenolic compounds in grapes and wines. *J. Agric. Food Chem.,* 2017, vol. 65, 4009-4026
- **SARNECKIS, C. J. D., R.G. ; JONES, P. ; MERCURIO, M. ; HERDERICH, M.J. ; SMITH, P.A.** Quantification of condensed tannins by precipitation with methyl cellulose: Development and validation of an optimised tool for grape and wine analysis. *Aust. J. Grape Wine Res.,* 2006, vol. 12, 39-49
- **OSAWA, C. C. ; FERRARI, C. C. ; SIQUEIRA, P. B. ; BRITO, C. A. K. DE ; SANVIDO, G. B. ; BOTELHO, A. P. ; BOLINI, H. M. A.** Avaliação do perfil sensorial de chá light sabor pêssego. *Ciência e Tecnologia de Alimentos,* 2008, vol. 28, 102-108
- **KONKEL, F. E. ; OLIVEIRA, S. M. R. DE ; SIMÕES, D. R. S. ; DEMIATE, I. M.** Avaliação sensorial de doce de leite pastoso com diferentes concentrações de amido. *Ciência e Tecnologia de Alimentos,* 2004, vol. 24 (2), 249-254